**Europäisches Patentamt**

**European Patent Office**

**Office européen des brevets**

(19)

(11) Veröffentlichungsnummer: **0 273 215 B1**

(12) # EUROPÄISCHE PATENTSCHRIFT

(45) Veröffentlichungstag der Patentschrift:
28.02.90

(21) Anmeldenummer: **87117701.0**

(22) Anmeldetag: **30.11.87**

(51) Int. Cl.⁴: **F16P 3/14**, G08B 13/18, G01V 9/04

(54) Autokollimationslichtvorhang.

(30) Priorität: **09.12.86 DE 3641926**

(43) Veröffentlichungstag der Anmeldung:
**06.07.88 Patentblatt 88/27**

(45) Bekanntmachung des Hinweises auf die Patenterteilung:
**28.02.90 Patentblatt 90/9**

(84) Benannte Vertragsstaaten:
**BE DE FR GB**

(56) Entgegenhaltungen:
**DE-A- 1 934 321**
**DE-B- 1 261 025**
**FR-A- 2 442 457**

(73) Patentinhaber: **Erwin Sick GmbH Optik-Elektronik, Sebastian-Kneipp-Strasse 1, D-7808 Waldkirch(DE)**

(72) Erfinder: **Ball, Hans-Klaus, Bayernstrasse 12, D-7800 Freiburg/Brsg.(DE)**

(74) Vertreter: **Dipl.-Phys.Dr. Manitz Dipl.-Ing., Dipl.-W.-Ing. Finsterwald Dipl.-Ing. Grämkow Dipl.-Chem.Dr. Heyn Dipl.-Phys. Rotermund, Morgan, B.Sc.(Phys.) Robert-Koch-Strasse 1, D-8000 München 22(DE)**

## Beschreibung

Die Erfindung betrifft einen Autokollimationslichtvorhang mit einer Lichtquelle, einer Lichtstrahlerzeugungsoptik, einer den Lichtstrahl empfangenden Lichtablenkvorrichtung, wie einem Spiegelrad, einem Reflektor am Ende eines Überwachungsbereiches, der periodisch von dem Lichtstrahl abgetastet wird und in Abtastrichtung in eine Vielzahl von zwei Typen von einander abwechselnden Feldern unterteilt ist, sowie einer einen vor der Lichtablenkvorrichtung ausgespiegelten Empfangsstrahl aufnehmenden Lichtempfangsanordnung mit einem Photoempfänger zur Aufnahme des vom Reflektor bei freiem Überwachungsbereich zurückgeworfenen Lichtes.

Zum Schutz des arbeitenden Menschen vor gefährlichen Maschinen werden heute z.B. an Pressen, Stanzen oder Robotern Lichtgitter und Lichtvorhänge eingesetzt, die bei Eingriff des Bedienungspersonals die gefährliche Bewegung der Maschine stillsetzen bzw. verhindern.

Mit der durch die Aufteilung des Reflektors in unterschiedliche Felder erhaltenen Modulation des auftreffenden Gleichlichtes wird eine Manipulation durch Einbringen von reflektierendem Material in den Überwachungsbereich erschwert.

Bei einem aus der DE-AS 12 61 025 bekannten Autokollimationslichtvorhang der eingangs genannten Art ist der Reflektor in reflektierende und nicht reflektierende Streifen unterteilt. Ungünstig ist hierbei, daß im Be reich der nicht reflektierenden Streifen eine unterbrechung des Überwachuangsbereiches eintritt.

Das Ziel der Erfindung besteht darin, einen Autokollimationslichtvorhang der eingangs genannten Art zu schaffen, der unter Ausschluß einer Manipulation durch in den Überwachungsbereich eingebrachtes reflektierendes Material eine lückenlose Erfassung des gesamten Überwachungsbereiches sicherstellt und sich damit auch für hohe Sicherheitsanforderungen eignet.

Zur Lösung dieser Aufgabe sieht die Erfindung vor, daß die zwei Typen von einander abwechselnden Feldern des Reflektors den Spektralbereich und/oder den Polarisationszustand des auftreffenden Lichtes unterschiedlich beeinflussende Eigenschaften aufweisen und die Lichtempfangsanordnung einen zweiten Photoempfänger umfaßt, der so befiltert ist, daß er nur das von dem einen Typ von Feldern reflektierte Licht empfängt, das von dem anderen Typ von Feldern dagegen nicht, während der erste Photoempfänger auf alles vom Reflektor zurückgeworfene Licht anspricht, und daß beide Photoempfänger an eine logische Verknüpfungsschaltung angeschlossen sind, die eine Freigabe des Überwachungsbereiches nur dann signalisiert, wenn der zweite Photoempfänger ein Wechselsignal, der ander ein Gleichsignal abgibt.

Aufgrund dieser Ausbildung wird gleichzeitig eine leichte Manipulation des Autokollimationslichtvorhanges durch das Einbringen von reflektierendem Material in den Überwachungsbereich unterbunden und sichergestellt, daß der gesamte Überwachungsbereich lückenlos erfaßt wird. Es werden demnach insbesondere auch solche nicht reflektierenden Materialien erfaßt, die eine gleiche oder geringere Breite als die Felder aufweisen und mit diesen ausgerichtet sind.

Eine leichte Manipulation des Autokollimationslichtvorhanges wird dadurch vermieden, daß das vom Reflektor zurückgeworfene Licht in geeigneter Weise codiert und diese Codierung in der Lichtempfangsanordnung entschlüsselt und erkannt wird. Da es äußerst unwahrscheinlich ist, daß das die Codierung gar nicht kennende Bedienungspersonal einen entsprechend codierten reflektierenden Gegenstand in den Überwachungsbereich einbringen kann und über den gesamten Überwachungsbereich hinweg jegliches nicht reflektierende Material zuverlässig erfaßt wird, ist die Sicherheit des Autokollimationslichtvorhanges gegenüber unzulässigen Manipulationen sehr hoch.

Während der Hauptanspruch eine besonders einfache und leicht zu verwirklichende Codierung des vom Reflektor reflektierten Lichtes vorschlägt, kann grundsätzlich jede Art einer Codierung des vom Reflektor zurückgeworfenen Lichtes, die auf der Empfangsseite erkannt werden kann, verwendet werden.

Bevorzugt ist vorgesehen, daß am ersten Photoempfänger eine Ausgleichsschaltung vorgesehen ist, welche geringe Pegelunterschiede der beiden von den Feldern reflektierten Signale ausgleicht.

Besonders bevorzugt ist es, wenn alle Felder gleich breit sind.

Um die Erkennungsempfindlichkeit des Lichtvorhanges nicht zu beeinträchtigen, soll weiter vorgesehen sein, daß die Breite der Felder in Abtastrichtung größer als die erforderliche Auflösung des Lichtvorhanges ist. Insbesondere ist die Breite der Felder deutlich größer als die Ausdehnung des Abtastlichtfleckes auf dem Reflektor in Abtastrichtung.

Eine erste praktische Ausführungsform kennzeichnet sich dadurch, daß der Reflektor ein Tripelreflektor mit einander abwechselnden nicht metallisierten und metallisierten Feldern ist, daß ein Polarisator zur linearen Polarisierung des Lichts der Lichtquelle vorgesehen ist und daß vor dem zweiten Photoempfänger ein gegenüber dem Polarisator gekreuzter Analysator angeordnet ist.

Eine andere, problemlos realisierbare Möglichkeit besteht darin, daß wenigstens der eine Typ von Feldern farbig ausgelegt ist und daß vor dem zweiten Photoempfänger ein zu dieser Farbegebung komplementärer Farbfilter angeordnet ist.

Die Erfindung wird im folgenden beispielsweise anhand der Zeichnung beschrieben; in dieser zeigt:

Fig. 1 eine schematische Seitenansicht eines Autokollimationslichtvorhanges und

Fig. 2 eine Teildraufsicht eines Retroreflektors des Autokollimationslichtvorhanges gemäß Fig. 1.

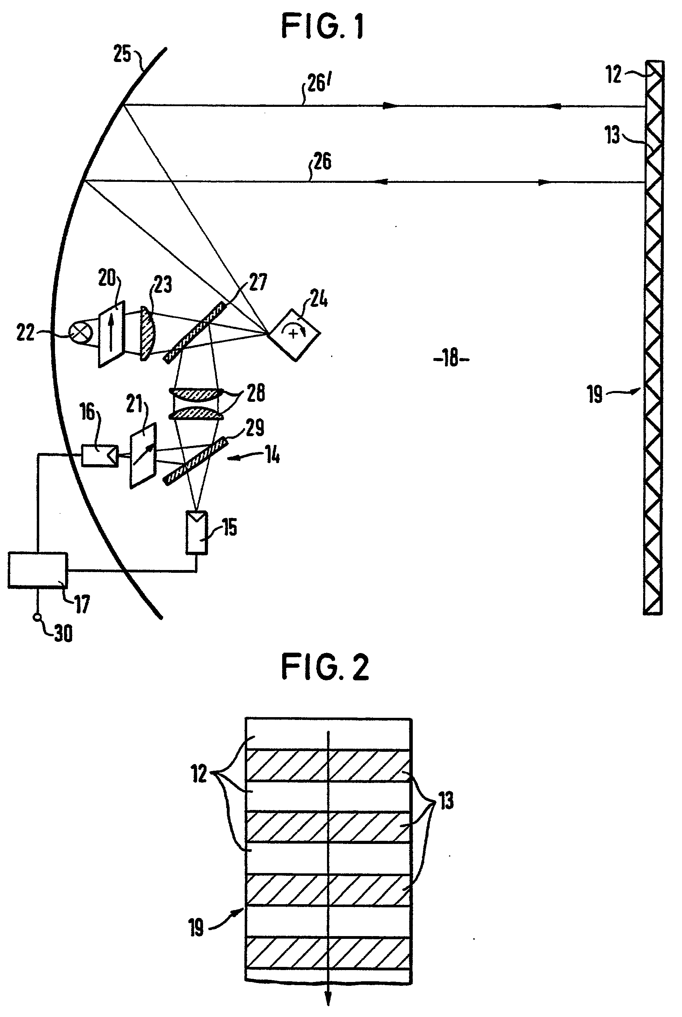

Nach Fig. 1 wird das von einer Lichtquelle 22 ausgesendete Licht durch einen linearen Polarisator 20 zu einer Optik 23 geschickt, die auf ein Spiegelrad 24 ein gerichtetes Lichtbündel konzentriert. Das Spiegelrad 24 ist im Brennpunkt eines streifenförmigen Hohlspiegels 25 angeordnet, welcher das vom in Pfeilrichtung umlaufenden Spiegelrad 24 reflektierte Licht empfängt und als parallelen Fahrstrahl 26 bzw. 26' in einen Überwachungsbereich 18 schickt, an dessen Ende ein als streifenförmiger Retroreflektor ausgebildet Reflektor 19 angeordnet ist, der das auftreffende Licht in sich selbst zurück zum Spiegelrad 24 reflektiert, von wo es auf einen im Sendestrahlengang angeordneten teildurchlässigen Spiegel 27 gelangt, der einen Teil des Empfangslichtes ausspiegelt und über eine Empfangsoptik 28 auf einen ersten Photoempfänger 15 konzentriert. Zwischen der Empfangsoptik 28 und dem ersten Photoempfänger 15 ist ein weiterer teildurchlässiger Spiegel 29 angeordnet, der einen Teil des Empfangslichtes über einen zum Polarisator 20 gekreuzten Analysator 21 auf einen zweiten Photoempfänger 16 konzentriert.

Die beiden Photoempfänger 15, 16 sind an eine logische Verknüpfungsschaltung 17 angelegt, die einen Überwachungsausgang 30 besitzt.

Nach Fig. 2 ist der Reflektor 19 in der durch einen Pfeil angedeuteten Abtastrichtung in eine Vielzahl von aufeinanderfolgenden Feldern 12, 13 eingeteilt, die aus Tripelreflektoren bestehen, welche jedoch in den Feldern 12 nicht metallisiert, in den Feldern 13 dagegen metallisiert sind. Auf diese Weise besitzen die Felder 12 eine depolarisierende Eigenschaft, so daß die von dem Polarisator 20 geschaffene Polarisation der Sendelichtstrahlen durch die Reflexion an den Feldern 12 teilweise beseitigt wird.

Das an den metallisierten Feldern 13 reflektierte Licht behält dagegen seinen Polarisationszustand bei.

Auf diese Weise empfängt der erste Photoempfänger 15 das von beiden Feldern 12, 13 reflektierte Licht ungestört, so daß an seinem Ausgang ein Gleichspannungssignal entsteht, sofern der Überwachungsbereich 18 von Hindernissen frei ist. Gewisse geringe Pegelunterschiede der beiden von den Feldern 12 bzw. 13 stammenden Signale können durch eine Ausgleichsschaltung beseitigt werden.

Das zum zweiten Photoempfänger 16 gelangende Licht wird dagegen vom Analysator 21 unterschiedlich beeinflußt, je nach dem, ob es von den Feldern 12 oder 13 kommt. Das von den Feldern 12 kommende Licht geht teilweise durch den Analysator 21 hindurch, weil es depolarisiert ist. Das von den Feldern 13 kommende Licht wird dagegen vom Analysator 21 nicht durchgelassen, so daß während der Zeiträume, wo der Abtastlichtstrahl über die Felder 13 streicht, kein Empfangssignal am Ausgang des zweiten Photoempfängers 16 erscheint. Insgesamt liefert also der zweite Photoempfänger 16 bei freiem Überwachungsbereich ein Wechselsignal an die logische Verknüpfungsschaltung 17.

Wenn der Überwachungsbereich 18 unterbrochen wird, liefern beide Photoempfänger 15, 16 kein Ausgangssignal mehr, so daß am Überwachungsausgang 30 ein Machinenstoppsignal erscheint.

Wird ein stark reflektierender Gegenstand in den Überwachungsbereich 18 eingebracht, so liefert der zweite Photoempfänger 16 nicht mehr das für den Reflektor 19 charakteristische Wechselsignal, was von der logischen Verknüpfungsschaltung 17 erkannt wird. Hierauf wird ebenfalls ein Warn- oder Maschinenstoppsignal am Überwachungsausgang 30 abgegeben. Dies geschieht auch, wenn z.B. eine Person mit heller Kleidung mit einem Körperteil in den Überwachungsbereich 18 eindringt.

Das Wesen der Erfindung besteht also darin, daß der Reflektor 19 bei freiem Überwachungsbereich 18 einen in spezieller Weise hinsichtlich seines Polarisationszustandes oder seines Spektralbereiches dynamisch codierten Lichtstrahl reflektiert und daß diese Codierung in der Lichtempfangsanordnung 14 ausgewertet wird. Nur wenn diese vorgegebene zeitliche Codierung im Empfangslicht erscheint, wird von der logischen Verknüpfungs schaltung 17 ein freier Überwachungsbereich 18 signalisiert, anderenfalls nicht.

**Patentansprüche**

1. Autokollimationslichtvorhang mit einer Lichtquelle (22), einer Lichtstrahlerzeugungsoptik (20, 23), einer den Lichtstrahl empfangenden Lichtablenkvorrichtung, wie einem Spiegelrad (24), einem Reflektor (19) am Ende eines Überwachungsbereiches (18), der periodisch von dem Lichtstrahl abgetastet wird und in Abtastrichtung in eine Vielzahl von zwei Typen von einander abwechselnden Feldern (12, 13) unterteilt ist, sowie einer einen vor der Lichtablenkvorrichtung ausgespiegelten Empfangsstrahl aufnehmenden Lichtempfangsanordnung (14) mit einem Photoempfänger (15) zur Aufnahme des vom Reflektor (19) bei freiem Überwachungsbereich (18) zurückgeworfenen Lichtes, dadurch **gekennzeichnet,** daß die zwei Typen von einander abwechselnden Feldern (12, 13) des Reflektors (19) den Spektralbereich und/oder den Polarisationszustand des auftreffenden Lichtes unterschiedlich beeinflussende Eigenschaften aufweisen und die Lichtempfangsanordnung (14) einen zweiten Photoempfänger (16) umfaßt, der so befiltert ist, daß er nur das von dem einen Typ (12) von Feldern reflektierte Licht empfängt, das von dem anderen Typ (13) von Feldern dagegen nicht, während der erste Photoempfänger (15) auf alles vom Reflektor (19) zurückgeworfene Licht anspricht, und daß beide Photoempfänger (15, 16) an eine logische Verknüpfungsschaltung (17) angeschlossen sind, die eine Freigabe des Überwachungsbereiches nur dann signalisiert, wenn der zweite Photoempfänger (16) ein Wechselsignal, der andere ein Gleichsignal abgibt.

2. Autokollimationslichtvorhang nach Anspruch 1, dadurch **gekennzeichnet,** daß am ersten Photoempfänger (15) eine Ausgleichsschaltung vorgesehen ist, welche geringe Pegelunterschiede der beiden von den Feldern (12 bzw. 13) reflektierten Signale ausgleicht.

3. Autokollimationslichtvorhang nach Anspruch 1 oder 2, dadurch **gekennzeichnet,** daß alle Felder (12, 13) gleich breit sind.

4. Autokollimationslichtvorhang nach einem der vorhergehenden Ansprüche, dadurch **gekennzeichnet,** daß die Breite der Felder (12, 13) in Abtastrichtung größer als die erforderliche Auflösung des Lichtvorhanges ist.

5. Autokollimationslichtvorhang nach einem der vorhergehenden Ansprüche,
dadurch **gekennzeichnet,** daß der Reflektor (19) ein Tripelreflektor mit einander abwechselnden nicht metallisierten und metallisierten Feldern (12, 13) ist, daß ein Polarisator (20) zur linearen Polarisierung des Lichts der Lichtquelle (22) vorgesehen ist und daß vor dem zweiten Photoempfänger (16) ein gegenüber dem Plarisator (20) gekreuzter Analysator (21) angeordnet ist.

6. Autokollimationslichtvorhang nach einem der Ansprüche 1 bis 4,
dadurch **gekennzeichnet,** daß wenigstens der eine Typ von Feldern (12, 13) farbig ausgelegt ist und daß vor dem zweiten Photoempfänger (16) ein zu dieser Farbgebung komplentärer Farbfilter angeordnet ist.

**Revendications**

1. Rideau photoélectrique autocollimateur, comportant une source lumineuse (22), un dispositif optique (20, 23) générateur de rayons lumineux, un dispositif de déviation de lumière captant le rayon lumineux, tel qu'une roue à miroir (24), un réflecteur (19) disposé à l'extrémité d'une zone de contrôle (18) qui est balayée périodiquement par le rayon lumineux et qui, dans le sens du balayage, est subdivisée en une multitude de deux types de champs (12, 13) alternés, ainsi qu'un dispositif récepteur de lumière (14), captant un rayon de réception réfléchi devant le dispositif de déviation de lumière, et comportant un photodétecteur (15) destiné à recevoir la lumière renvoyée par le réflecteur (19) lorsque la zone de contrôle (18) est libre, caractérisé en ce que les deux types de champs alternés (12, 13) du réflecteur (19) présentent des propriétés qui influent différemment sur la zone spectrale et/ou l'état de polarisation de la lumière incidente et le dispositif récepteur de lumière (14) comprend un second photodétecteur (16) qui est filtré de manière telle, qu'il ne capte que la lumière réfléchie par un des types (12) de champs et, par contre, pas celle réfléchie par l'autre type (13) de champs, alors que le premier photodétecteur (15) est sensible à toute la lumière renvoyée par le réflecteur (19), et en ce que les deux photodétecteurs (15, 16) sont reliés à un circuit combinatoire logique (17) qui signale que la zone de contrôle est libre, uniquement si le second photodétecteur (16) émet un signal alternatif et l'autre un signal continu.

2. Rideau photoélectrique autocollimateur selon la revendication 1, caractérisé en ce qu'il est prévu au niveau du premier photodétecteur (15) un circuit de compensation qui compense de faibles différences de niveau des deux signaux réfléchis par les champs (12 ou 13).

3. Rideau photoélectrique autocollimateur selon l'une des revendications 1 et 2, caractérisé en ce que tous les champs (12, 13) sont de même largeur.

4. Rideau photoélectrique autocollimateur selon l'une quelconque des revendications précédentes, caractérisé en ce que la largeur des champs (12, 13), dans le sens du balayage, est plus grande que la définition nécessaire du rideau photoélectrique.

5. Rideau photoélectrique autocollimateur selon l'une quelconque des revendications précédentes, caractérisé en ce que le réflecteur (19) est un réflecteur triple comportant des champs métallisés et non métallisés (12, 13) alternés, en ce qu'il est prévu un polariseur (20) destiné à la polarisation linéaire de la lumière de la source lumineuse (22), et en ce qu'un analyseur (21) est disposé devant le second photodétecteur (16), obliquement par rapport au polariseur (20).

6. Rideau photoélectrique autocollimateur selon l'une quelconque des revendications 1 à 4, caractérisé en ce qu'au moins un des types de champs (12, 13) est réalisé en couleurs et en ce qu'un filtre chromatique, complémentaire de cette coloration, est disposé devant le second photodétecteur (16).

**Claims**

1. Autocollimation light curtain comprising a light source (22); a light beam generating optical system (20, 23); a light deflecting device such as a mirror wheel (24) which receives the light beam, a reflector (19) at the end of a monitoring region (18) which is periodically scanned by the light beam and is subdivided in the scanning direction into a plurality of fields (12, 13) of two types which alternate with each other; and also a light receiving arrangement (14) which receives a received light beam reflected out of the beam path in front of the light deflecting device and which has a photoreceiver (15) for receiving the light reflected back from the reflector (19) when the monitored region is free, characterised in that the two alternating types of fields (12, 13) of the reflector (19) have characteristics which influence the spectral range and/or the state of polarisation of the incident light and the light receiving arrangement (14) includes a second photoreceiver (16) which is so filtered that it receives only light reflected form the one type (12) of fields but not light from the other type (13) of fields, whereas the first photoreceiver responds to all light reflected back from the reflector (19); and in that both photoreceivers (15, 16) are connected to a logic circuit (17) which only signals freedom of the monitoring region when the second photoreceiver (16) transmits an alternating signal and the first photoreceiver (15) transmits a dc signal.

2. Autocollimation light curtain in accordance with claim 1, characterised in that a balance circuit is provided at the first photoreceiver (15) which balances out small differences in level of the two signals reflected from the fields (12 and 13 respectively).

3. Autocollimation light curtain in accordance with claim 1 or claim 2, characterised in that all fields (12, 13) are of the same width.

4. Autocollimation light curtain in accordance with claim 1, characterised in that the widths of the fields (12, 13) in the scanning direction is larger than the required resolution of the light curtain.

5. Autocollimation light curtain in accordance with claim 1, characterised in that the reflector (19) is a triple reflector with alternating non-metallised and metallised fields (12, 13); that a polarizer (20) is provided for linear polarization of the light of the light source (22); and in that an analyser (21) crossed relative to the polarizer (20) is arranged in front of the second photoreceiver (16).

6. Autocollimation light curtain in accordance with claim 1, characterised in that one type of field (12, 13) is coloured; and in that a colour filter complementary to this colouring is arranged in front of the second photoreceiver (16).

# FIG. 1

# FIG. 2